# EUROPÄISCHE PATENTANMELDUNG

(11) **EP 2 631 041 A2**
(43) Veröffentlichungstag der Anmeldung: **28.08.2013**
(21) Anmeldenummer: 13154899.2
(22) Anmeldetag: 12.02.2013
(51) Int. Cl.: B25J 5/04

(54) **Mobiler Roboter**

(30) Priorität: 23.02.2012 DE 102012003690
(71) Anmelder: KUKA Roboter GmbH, 86165 Augsburg (DE)
(72) Erfinder: Buchstab, Alois, 86391 Stadtbergen (DE)
(74) Vertreter: Patentanwälte Funk & Böss GbR

(57) **Zusammenfassung**

Die Erfindung betrifft einen mobilen Roboter, aufweisend
- ein omnidirektional fahrbares Trägerfahrzeug (1) mit mehreren Omnidirektional-Rädern (13) und Antrieben zum Antreiben der Omnidirektional-Räder (13),
- einen Roboterarm (2), der mehrere, hintereinander angeordnete Glieder (3-7) und Antriebe zum Bewegen der Glieder (3-7) aufweist, und
- eine Lagervorrichtung (17), die ausgebildet ist, den Roboterarm (2) relativ zum Trägerfahrzeug (1) automatisch verfahrbar am Trägerfahrzeug (1) zu lagern und einen der Lagervorrichtung (17) zugeordneten Antrieb zum Bewegen des Roboterarms (2) relativ zum Trägerfahrzeug (1).

## Beschreibung

Die Erfindung betrifft einen mobilen Roboter, aufweisend ein omnidirektional fahrbares Trägerfahrzeug mit mehreren Omnidirektional-Rädern und Antrieben zum Antreiben der Omnidirektional-Räder, sowie einen Roboterarm, der mehrere, hintereinander angeordnete Glieder und Antriebe zum Bewegen der Glieder aufweist.

Roboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Roboter weisen üblicherweise einen Roboterarm mit mehreren über Gelenke verbundene Glieder und programmierbare Steuerungen (Steuervorrichtungen) auf, die während des Betriebs die Bewegungsabläufe des Roboters steuern bzw. regeln. Die Glieder werden über Antriebe, insbesondere elektrische Antriebe, die von der Steuervorrichtung angesteuert werden, insbesondere bezüglich der Bewegungsachsen bewegt.

Die US 2010/0224427 A1 offenbart einen mobilen Roboter, welcher einen Industrieroboter und ein omnidirektionales Trägerfahrzeug aufweist, auf dem der Industrieroboter befestigt ist. Das omnidirektionale Trägerfahrzeug umfasst omnidirektionale Räder und Antriebe zum Bewegen der omnidirektionalen Räder. Der Industrieroboter umfasst einen Roboterarm mit mehreren, hintereinander angeordneten Gliedern und einen Steuerrechner zum Bewegen des Roboterarms.

Aufgabe der Erfindung ist es, einen verbesserten mobilen Roboter anzugeben.

Die Aufgabe der Erfindung wird gelöst durch einen mobiler Roboter, aufweisend
- ein omnidirektional fahrbares Trägerfahrzeug mit mehreren Omnidirektional-Rädern und Antrieben zum Antreiben der Omnidirektional-Räder,
- einen Roboterarm, der mehrere, hintereinander angeordnete Glieder und Antriebe zum Bewegen der Glieder aufweist, und
- eine Lagervorrichtung, die ausgebildet ist, den Roboterarm relativ zum Trägerfahrzeug automatisch verfahrbar am Trägerfahrzeug zu lagern und einen der Lagervorrichtung zugeordneten Antrieb zum Bewegen des Roboterarms relativ zum Trägerfahrzeug.

Unter einem omnidirektional fahrbaren Trägerfahrzeug mit mehreren Omnidirektional-Rädern und Antrieben zum Antreiben der Omnidirektional-Räder kann insbesondere ein Fahrzeug verstanden werden, das sich insbesondere auf geraden Wegen in beliebigen Richtungen auf einem Untergrund, d.h. in einer Fahrebene bewegen kann, ohne dass es einer Lenkbewegung von lenkbar gelagerten Rädern bedarf. Die Omnidirektional-Räder können insbesondere ausschließlich in ihren Raddrehachsen drehbar, im Übrigen jedoch starr an dem Trägerfahrzeug gelagert sein. Eine gewünschte Fahrtrichtung oder eine gewünschte Drehung des Trägerfahrzeugs kann ausschließlich durch eine Differenz von Drehzahlen der Omnidirektional-Räder erreicht werden. Bei den Omnidirektional-Rädern kann es sich somit beispielsweise um Mecanum-Räder handeln.

Die Lagervorrichtung weist Antrieb auf, mittels derer der auf der Lagervorrichtung befestigte Roboterarm aktiv bewegt werden kann. Die Lagervorrichtung befestigt also den Roboterarm nicht starr an dem Trägerfahrzeug, sondern ermöglicht eine automatische Bewegung des Roboterarms auf dem Trägerfahrzeug bzw. bezüglich des Trägerfahrzeugs.

Die Lagervorrichtung kann ausgebildet sein, den Roboterarm in einer vertikalen und/oder horizontalen Richtung zu verfahren. Die Lagervorrichtung kann den Roboterarm beispielsweise in einer reinen vertikalen Richtung bewegen, so dass der gesamte Roboterarm bezüglich des Trägerfahrzeugs angehoben und/oder abgesenkt werden kann. Die Lagervorrichtung kann den Roboterarm aber auch in einer reinen horizontalen Richtung bewegen, so dass der gesamte Roboterarm bezüglich des Trägerfahrzeugs in einer gleich bleibenden Höhe hin und her bzw. vor und zurück bewegt werden kann. Die Lagervorrichtung kann in speziellen Ausführungen auch ausgebildet sein, den Roboterarm in einer überlagerten vertikalen und horizontalen Richtung zu verfahren. So kann beispielsweise eine linear verfahrbare Lagervorrichtung schräg, windschief und/oder diagonal im Raum verfahrbar ausgebildet bzw. ausgerichtet sein.

In einer Ausführungsform kann das Trägerfahrzeug eine vertikal verfahrende Lagervorrichtung aufweisen, welche insbesondere an einem Fahrzeuggrundkörper des Trägerfahrzeugs befestigt ist. An der vom Fahrzeuggrundkörper abgewandten Seite der Lagervorrichtung kann ein Tragboden befestigt sein, dessen Höhe mittels der Lagervorrichtung automatisch verstellt werden kann. An dem Tragboden kann eine weitere, horizontal verfahrende Lagervorrichtung angeordnet sein. Auf der weitere, horizontal verfahrenden Lagervorrichtung kann der Roboterarm mit seinem Gestell befestigt sein, so dass der Roboterarm mittels der vertikal verfahrenden Lagervorrichtung angehoben und/oder abgesenkt werden kann und mittels der weiteren, horizontal verfahrenden Lagervorrichtung auf einer linearen Bahn in einer horizontalen Ebene bewegt werden kann.

Der vertikal verfahrenden Lagervorrichtung und der horizontal verfahrenden Lagervorrichtung ist jeweils ein Antrieb zugeordnet, welcher insbesondere mit einer Steuervorrichtung für den Roboterarm verbunden ist. Somit ist es der Steuervorrichtung ermöglicht, die beiden Lagervorrichtungen und den Roboterarm zw. dessen Gestell vertikal und/oder horizontal automatisch zu verstellen.

Die Lagervorrichtung kann wenigstens eine an dem Trägerfahrzeug befestigte Längsschiene aufweisen, auf welcher der Roboterarm linear fahrbar gelagert ist.

In einer weiteren Ausführungsform kann also unmittelbar an dem Trägerfahrzeug eine aufgrund der Längsschiene vertikal verfahrbare Lagervorrichtung ausgebildet sein. Die vertikal verfahrbare Lagervorrichtung weist in dieser Ausführungsform wenigstens eine starr mit dem Trägerfahrzeug verbundene Längsschiene auf, an der ein Schlitten höhenverstellbar, d.h. linear verschiebbar gelagert ist. Auf dem Schlitten ist das Gestell des Roboterarms befestigt, so dass bei einem Heben und/oder Senken des Schlittens der gesamte Roboterarm gehoben bzw. gesenkt wird. Der Schlitten kann über Umlenkketten mit einem Gegengewicht verbunden sein. Der Lagervorrichtung kann ein weiterer Antrieb zugeordnet sein, mittels dem der Roboterarm bzw. dessen Gestell entlang der Längsschiene automatisch vertikal gehoben und/oder gesenkt werden kann. Auch dieser Antrieb kann insbesondere mit der Steuervorrichtung für den Roboterarm verbunden sein, sodass es der Steuervorrichtung ermöglicht ist, den Roboterarm, d.h. dessen Gestell automatisch zu Heben und/oder zu Senken. Die Lagervorrichtung realisiert in dieser Ausführungsform somit eine vertikal ausgerichtete Linearachse, bezüglich derer der Roboterarm in Höhenrichtung verfahrbar ist.

Der mobile Roboter kann generell eine Hubvorrichtung aufweisen, die ausgebildet ist, das Trägerfahrzeug anzuheben, derart, dass die Omnidirektional-Räder vom Eigengewicht des mobilen Roboters zumindest überwiegend oder vollständig entlastet sind. Der Hubvorrichtung sind dabei Antriebe zum Bewegen der Hubvorrichtung zugeordnet. Die Hubvorrichtung kann insbesondere wenigstens drei, insbesondere vier automatisch verstellbare Hub-Beine und Antriebe zum Heben und Senken der Hub-Beine aufweisen.

Die Hubvorrichtung kann beispielsweise vier automatisch verstellbare Hub-Beine aufwesien. Hierbei ist jedem von vier Omnidirektional-Rädern ein eigenes Hub-Bein zugeordnet. Jedem Hub-Bein kann ein Antrieb zum Heben und Senken des Hub-Beins zugeordnet sein. Jedes Hub-Bein kann beispielsweise einen Ausleger aufweisen, der entweder starr mit dem Trägerfahrzeug verbunden sein kann oder der ausfahrbar und einfahrbar am Trägerfahrzeug gelagert ist. Im eingefahrenen Zustand können dabei die Ausleger nicht mehr oder allenfalls nur noch geringfügig über die Außenkontur des Trägerfahrzeugs hinaus stehen, so dass die Ausleger beim Fahren des Trägerfahrzeugs keine Störkontur bilden. In einer ersten Ausführung kann eine Höhenverstellung dadurch erfolgen, dass der Ausleger selbst höhenverstellbar an dem Trägerfahrzeug gelagert ist. In einer anderen Ausführung können die Ausleger ohne eine Höhenverstellung mit ihren Trägerfahrzeug-seitigen Enden an dem Trägerfahrzeug gelagert sein und eine Höhenverstellung durch Heben und/oder Senken eines an einem freien Ende des Auslegers gelagerten Standfußes erreicht werden.

Eine Hubsteuervorrichtung für die Hubvorrichtung kann eingerichtet sein, die Antriebe der Hubvorrichtung, insbesondere die Antriebe der Hub-Beine derart anzusteuern, sodass die Omnidirektional-Räder vom Eigengewicht des mobilen Roboters zumindest überwiegend oder vollständig entlastet sind und das Trägerfahrzeug derart ausgerichtet ist, dass das Gestell des Roboterarms eine vorbestimmte Orientierung im Raum einnimmt. In einer Ausführung kann die vorbestimmte Orientierung beispielsweise durch eine genau horizontale Ausrichtung des Trägerfahrzeugs, insbesondere dessen ebener Transportauflageboden bzw. durch eine genau lotrechte Ausrichtung der Lagervorrichtung bestimmt sein. Generell kann die vorbestimmte Orientierung durch drei programmierte Raumorientierungen eines Basisbezugskoordinatensystems des Roboterarms bestimmt sein. Das Basisbezugskoordinatensystem kann beispielsweise bezüglich des Gestells festgelegt sein.

In allen Ausführungen kann der mobile Roboter eine Einhausung aufweisen, welche den sich in der Nähe des mobilen Roboters befindliche Personen einen Eingriff in das Innere des mobilen Roboters zumindest teilweise verwehren können. Im Inneren der Einhausung können die Steuervorrichtung und die Hubsteuervorrichtung angeordnet sein.

In einer speziellen Ausführungsform der Erfindung kann der mobiler Roboter, aufweisen:
- wenigstens ein omnidirektional fahrbares Trägerfahrzeug mit mehreren Omnidirektional-Rädern und Antrieben zum Antreiben der Omnidirektional-Räder,
- wenigstens ein weiteres omnidirektional fahrbares Trägerfahrzeug mit mehreren Omnidirektional-Rädern und Antrieben zum Antreiben der Omnidirektional-Räder, und
- einen das Trägerfahrzeug mit dem weiteren Trägerfahrzeug starr verbindenden Brückenträger, welcher die Lagervorrichtung und/oder den Roboterarm trägt.

In einer solchen Ausführungsform weist der mobile Roboter ein omnidirektional fahrbares Trägerfahrzeug mit mehreren Omnidirektional-Rädern und Antrieben zum Antreiben der Omnidirektional-Räder auf. Außerdem weist ein solcher mobiler Roboter ein weiteres omnidirektional fahrbares Trägerfahrzeug mit mehreren Omnidirektional-Rädern und Antrieben zum Antreiben der Omnidirektional-Räder auf. Dabei ist das eine Trägerfahrzeug mit dem weiteren Trägerfahrzeug durch einen Brückenträger starr verbunden. Der Brückenträger kann eine erste Tragsäule und eine zweite Tragsäule aufweisen. Die erste Tragsäule kann starr mit dem Trägerfahrzeug verbunden und die zweite Tragsäule kann starr mit dem anderen Trägerfahrzeug verbunden sein. Die beiden vertikalen Tragsäulen können von den Trägerfahrzeugen ausgehend senkrecht nach oben ragen. Die oberen Enden der beiden Tragsäulen können durch einen horizontal ausgerichteten Tragbalken derart verbunden sein, dass die beiden Trägerfahrzeuge in einem festen Abstand voneinander angeordnet sind. Mittels der beiden Trägerfahrzeuge, die den Brückenträger halten, ist der Brückenträger auf einem Boden, d.h. auf einer Fahrbahn oder einem Fahruntergrund verfahrbar.

Der Brückenträger kann eine Lagervorrichtung aufweisen. Die Lagervorrichtung kann insoweit starr an dem Brückenträger bzw. an dem Tragbalken des Brückenträgers befestigt sein. Die Lagervorrichtung für den Brückenträger kann wie eine der Lagervorrichtung ausgebildet sein, wie sie im Zusammenhang mit den anderen Ausführungsformen der Erfindung beschrieben sind. Die horizontal verfahrbare Lagervorrichtung kann wenigstens eine starr mit dem Brückenträger bzw. starr mit dem Tragbalken verbundene Längsschiene aufweisen, an der ein Schlitten auf einer gleich bleibenden Höhe verstellbar, d.h. linear hin und her verschiebbar gelagert ist. Auf dem Schlitten kann beispielsweise das Gestell des Roboterarms befestigt sein, so dass bei einem Hin- und Herbewegen des Schlittens der gesamte Roboterarm hin- und herbewegt wird. Der Lagervorrichtung ist ein weiterer, nicht näher dargestellter Antrieb zugeordnet, mittels dem der Roboterarm bzw. dessen Gestell entlang der Längsschiene automatisch hin- und herbewegt werden kann. Auch dieser Antrieb kann mit der Steuervorrichtung für den Roboterarm verbunden sein, sodass es der Steuervorrichtung ermöglicht ist, den Roboterarm, d.h. dessen Gestell automatisch hin- und herzubewegen. Die Lagervorrichtung realisiert in dieser Ausführungsform somit eine Roboter-Portalanlage, bezüglich derer der Roboterarm in einer horizontalen Ebene verfahrbar ist.

In allen Ausführungsformen kann die Lagervorrichtung ausgebildet sein, die weitere Lagervorrichtung in einer horizontalen Richtung, insbesondere linear zu bewegen. In allen Ausführungsformen kann alternativ oder ergänzend die weitere Lagervorrichtung ausgebildet sein, den Roboterarm in einer vertikalen Richtung, insbesondere linear zu bewegen.

In einer weiterbildenden Ausführungsform kann eine Lagervorrichtung an dem Brückenträger befestigt sein und eine weitere Lagervorrichtung vorgesehen sein, die automatisch verfahrbar an der Lagervorrichtung gelagert ist, wobei die weitere Lagervorrichtung ausgebildet ist, den Roboterarm relativ zur Lagervorrichtung automatisch verfahrbar zu lagern. Die weitere Lagervorrichtung ist dabei automatisch verfahrbar an der Lagervorrichtung gelagert, wobei die weitere Lagervorrichtung ausgebildet ist, den Roboterarm relativ zur Lagervorrichtung automatisch verfahrbar zu lagern. In einer speziellen Ausführung ist die Bewegungsrichtung der Lagervorrichtung senkrecht zur Bewegungsrichtung der Lagervorrichtung ausgeführt. Die Lagervorrichtung ist dabei ausgebildet, die weitere Lagervorrichtung in einer horizontalen linearen Richtung zu bewegen und die weitere Lagervorrichtung ist ausgebildet, den Roboterarm in einer vertikalen linearen Richtung zu bewegen. Mittels der Lagervorrichtung kann der Roboterarm also in dieser Ausführung hin- und herbewegt werden und mittels der Lagervorrichtung kann der Roboterarm angehoben und/oder abgesenkt werden. Die Lagervorrichtung und die Lagervorrichtung realisieren zusammen mit dem Brückenträger in dieser Ausführungsform somit eine zweiachsige Roboter-Portalanlage, bezüglich derer der Roboterarm in einer horizontalen Ebene und in vertikaler Richtung verfahrbar ist.

In allen Ausführungsformen kann der mobile Roboter, bzw. das eine oder die zwei oder mehreren Trägerfahrzeuge wenigstens einen Lithium-Ionen-Akkumulator aufweisen, der eingerichtet ist, die Antriebe des Trägerfahrzeugs, des Roboterarms, der Lagervorrichtungen, der Hubvorrichtung, der Steuervorrichtung, der weiteren Steuervorrichtung und/oder der Hubsteuervorrichtung mit elektrischer Energie zu versorgen. Der Lithium-Ionen-Akkumulator kann entnehmbar in oder an dem Trägerfahrzeug gelagert, insbesondere befestigt sein.

Zusammenfassen weist der mobile Roboter demnach wenigstens ein Trägerfahrzeug und wenigsten einen Roboterarm auf, der am Trägerfahrzeug befestigt ist. Es können also auch zwei oder mehrere Roboterarme an einem gemeinsamen Trägerfahrzeug gelagert sein. Mittels des Trägerfahrzeugs kann somit der wenigstens eine Roboterarm als solches fortbewegt werden. Das Trägerfahrzeug wird z.B. mittels einer Batterie, insbesondere eines Lithium-Ionen-Akkumulators mit elektrischer Energie versorgt. Das wenigstens eine Trägerfahrzeug kann ein Spurführungssystem aufweisen. Spurführungssysteme sind dem Fachmann allgemein bekannt und können beispielsweise optische Sensoren umfassen, welche beispielsweise am Trägerfahrzeug angebracht sind und mit Markierungen auf dem Fahrboden des Trägerfahrzeugs zusammenwirken, derart, dass die Längs- und/oder Querbewegungen des Trägerfahrzeugs automatisiert gesteuert werden können. Im Falle von zwei oder mehreren Trägerfahrzeugen können die Trägerfahrzeuge steuerungstechnisch gekoppelt sein, d.h. neben ihrer mechanischen Koppelung über einen Brückenträger können die Antriebe der zwei oder mehreren Trägerfahrzeuge durch eine gemeinsame Steuerungsvorrichtung synchron angesteuert werden, derart, dass die zwei oder mehreren Trägerfahrzeuge synchrone Bewegungen ausführen. Am Roboterarm kann ein Werkzeug befestigt sein, insbesondere an der Befestigungsvorrichtung bzw. dem Flansch des Roboterarms, sodass mittels des mobilen Roboters ein Werkstück automatisiert bearbeitet werden kann. Aufgrund des Trägerfahrzeugs ist es möglich, den erfindungsgemäßen mobilen Roboter an das Werkstück für dessen Bearbeitung insbesondere automatisch heran zu fahren. Insbesondere ist es vorgesehen, dass der mobile Roboter automatisch an eine vorgegebene Position an das Werkstück heranfährt, dort anhält und mit der Bearbeitung des Werkstücks beginnt. Vorzugsweise hält der mobile Roboter an der vorgegebenen Position in einer vorgegebenen Orientierung. Das Werkstück kann beispielsweise ein Rotorblatt eines Windkraftwerks oder ein Flügel eines Flugzeugs sein.

Ist das wenigstens eine Trägerfahrzeug an der vorgegebenen Position in einer vorgegebenen Orientierung angekommen, so kann das wenigstens eine Trägerfahrzeug mittels der Hubvorrichtung angehoben werden. Das Trägerfahrzeug oder die Trägerfahrzeuge sind dann starr auf dem Fahrgrund bzw. Fahrboden abgestellt und können bei ausgefahrenen Hubvorrichtungen nicht mehr vom Platz bewegt werden. Der wenigstens eine Roboterarm kann nun sein Roboterprogramm ausführen, d.h. mittels des Werkzeugs das Werkstück bearbeiten. Ist der Arbeitsraum des Roboterarms für eine gewünschte Bearbeitung des Werkstücks nicht ausreichend, so kann aufgrund der Lagervorrichtung der gesamte Roboterarm bewegt, insbesondere umpositioniert werden, wodurch sich der Arbeitsraum des Roboterarms erweitern lässt, ohne dass das Trägerfahrzeug bewegt werden muss. Es können auch zwei oder mehrere Roboterarme durch eine gemeinsame Lagervorrichtung simultan bewegt werden. Es können auch zwei oder mehrere Roboterarme durch jeweils eine separate, d.h. eigene Lagervorrichtung bewegt werden. In diesem Falle können die zwei oder mehrere Roboterarme unabhängig voneinander auf dem Trägerfahrzeug bewegt werden, ohne das Trägerfahrzeug bewegen zu müssen.

Der Roboterarm bzw. dessen Antriebe, die vorzugsweise als elektrische Antriebe, insbesondere als geregelte elektrische Antriebe ausgebildet sind, kann mittels der Steuervorrichtung derart angesteuert werden, dass der Roboterarm nach dem Heranfahren an das Werkstück automatisch das Werkstück mittels des Werkzeugs bearbeitet. Dazu läuft z.B. auf der Steuervorrichtung ein geeignetes Rechenprogramm, sodass die Steuervorrichtung z.B. basierend auf dem in der Steuervorrichtung gespeicherten mathematischen Modell das Werkstück bearbeiten kann. Das mathematische Modell vom Werkstück wurde beispielsweise aufgrund von dem Werkstück zugeordneten CAD-Daten erstellt.

Damit das Trägerfahrzeug sich automatisch bewegen kann, kann die Steuervorrichtung für den Roboterarm auch eingerichtet sein, die Antriebe des Trägerfahrzeugs derart anzusteuern, sodass dieses eine vorgegebene Bewegung ausführt. Es ist aber auch möglich, dass der erfindungsgemäße mobile Roboter eine weitere Steuervorrichtung aufweist, welche mit der Steuervorrichtung kommuniziert und eingerichtet ist, die Antriebe des Trägerfahrzeugs derart anzusteuern, sodass dieses eine vorgegebene Bewegung ausführt.

Um die Mobilität des erfindungsgemäßen mobilen Roboters zu erhöhen, sind die Räder als omnidirektionale Räder ausgeführt. Ein Beispiel eines omnidirektionalen Rades ist ein Mecanum-Rad. In diesem Fall handelt es sich bei dem Trägerfahrzeug um ein omnidirektionales Trägerfahrzeug, welches im Wesentlichen in alle Richtungen frei bewegbar ist. Mecanum-Räder sind dem Fachmann im Prinzip bekannt. Diese umfassen z.B. zwei starr miteinander verbundene Radscheiben, zwischen denen mehrere Rollkörper bezüglich ihrer Längsachsen drehbar gelagert sind. Die beiden Radscheiben können bezüglich einer Drehachse drehbar gelagert sein und mittels einer der Antriebe des Trägerfahrzeugs derart angetrieben werden, dass sich die beiden Radscheiben bezüglich der Drehachse drehen. Die Rollkörper sind vorzugsweise gleichmäßig zueinander beabstandet und derart an den Radscheiben gelagert, dass ihre Rollflächen über den Umfang der Radscheiben herausragen. Außerdem sind die Rollkörper vorzugsweise derart an den Radscheiben gelagert, dass ihre Längsachsen mit der Drehachse einen Winkel von beispielsweise 45° aufweisen.

Ein Vorteil des als omnidirektionales Trägerfahrzeug ausgebildeten Trägerfahrzeugs ist die erhöhte Flexibilität des erfindungsgemäßen mobilen Roboters. Durch den Einsatz eines solchen mobilen Roboters ist es möglich, gezielt den mobilen Roboter an das Werkstück, z.B. einem Rotorblatt, zu bringen, ohne dass das Werkstück bzw. das Rotorblatt transportiert und in eine spezielle Station gebracht werden muss. Mit dem erfindungsgemäßen mobilen Roboter könnte das Werkstück bzw. das Rotorblatt stationsweise bearbeitet werden, beispielsweise sowohl Vorder- als auch Rückseite des Rotorblatts. Zudem kann man durch den Einsatz eines zweiten erfindungsgemäßen mobilen Roboters die Taktzeit halbieren, bzw. andere Bearbeitungsschritte damit erledigen. Es kann sogar sein, den erfindungsgemäßen mobilen Roboter zwischen verschiedenen Fertigungshallen zu verfahren. Durch die Manövrierbarkeit des Trägerfahrzeugs mit omnidirektionalen Rädern ist es möglich, den Roboterarm entlang des Werkstück bzw. des Rotorblattes zu verfahren und pro Station z.B. über ein im Boden befindliches Andocksystem den Roboter inklusive der Prozesstechnik mit der notwendigen Energie zu versorgen. Es wären damit keine Stahl-, Beton- oder Fundamentarbeiten notwendig, welche zum einen sehr kostenintensiv und die Flexibilität der Anlage einschränken.

Verschiedene Ausführungsbeispiele der Erfindung sind exemplarisch in den beigefügten schematischen Zeichnungen dargestellt. Es zeigen:
- Fig. 1: eine erste Ausführungsform eines mobilen Roboters mit einem Omnidirektional-Räder aufweisenden Trägerfahrzeug und einem am Trägerfahrzeug mittel einer Lagervorrichtung verfahrbar gelagerten Roboterarm,
- Fig. 2: den Roboterarm des mobilen Roboters,
- Fig. 3: ein omnidirektionales Rad,
- Fig. 4: eine zweite Ausführungsform eines mobilen Roboters mit einer Hubvorrichtung und dem Roboterarm in einer oberen Position,
- Fig. 5: die zweite Ausführungsform des mobilen Roboters gemäß mit der Hubvorrichtung gemäß Fig. 4 und dem Roboterarm in einer unteren Position,
- Fig. 6: eine dritte Ausführungsform eines mobilen Roboters mit zwei Trägerfahrzeugen, einem diese Trägerfahrzeuge verbindenden Brückenträger, der eine horizontal verfahrbare Lagervorrichtung aufweist, und
- Fig. 7: eine vierte Ausführungsform eines mobilen Roboters mit zwei Trägerfahrzeugen, einem diese Trägerfahrzeuge verbindenden Brückenträger, der eine horizontal verfahrbare und eine vertikal verfahrbare Lagervorrichtung aufweist.

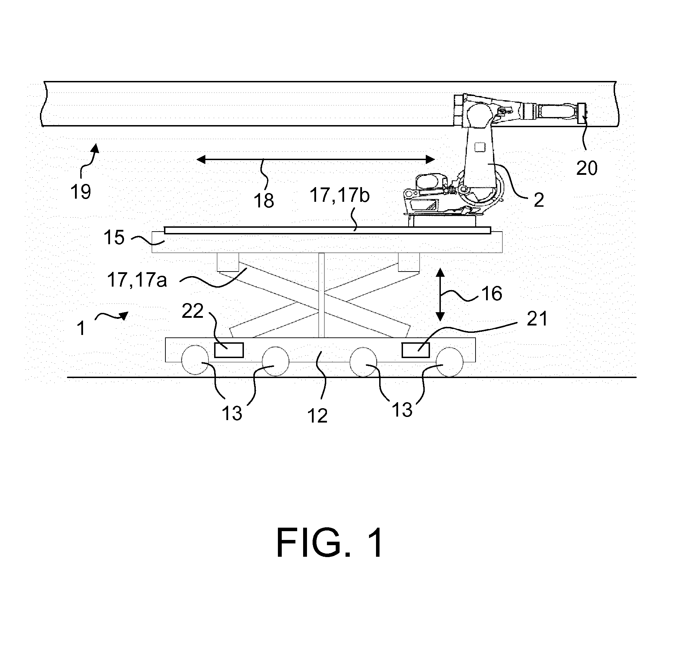

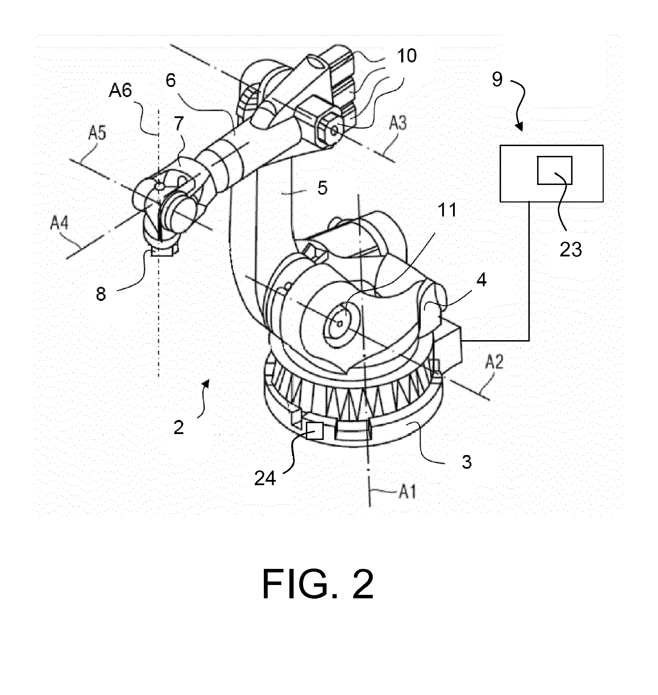

Die Fig. 1 zeigt einen mobilen Roboter, welcher ein Trägerfahrzeug 1 und einen am Trägerfahrzeug 1 befestigten Roboterarm 2 aufweist. Die Fig. 2 zeigt in einer perspektivischen Darstellung den Roboterarm 2.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Drehachsen A4, A5, A6.

Im Falle des Ausführungsbeispiels gemäß Fig. 1 ist der mobile Roboter als ein autonomer mobiler Roboter ausgebildet, sodass die Steuervorrichtung 21 des Trägerfahrzeugs 1 die Antriebe für die Omnidirektional-Räder 13 derart ansteuert, sodass sich der mobile Roboter auf einer vorgegebenen bzw. vorgebbaren Strecke bzw. Bahn bewegt.

Der mobile Roboter umfasst eine Steuervorrichtung 9, um den Roboterarm 2 zu bewegen. Die Steuervorrichtung 9 ist mit Antrieben des Roboterarms 2 verbunden. Die Antriebe sind im Falle des vorliegenden Ausführungsbeispiels elektrische Antriebe, insbesondere geregelte elektrische Antriebe. In der Figur 2 sind nur einige der elektrischen Motoren 10, 11 dieser Antriebe gezeigt. Der Roboterarm 2 und die Steuervorrichtung 9 sind insbesondere als Standard-Industrieroboter ausgeführt, der auf dem Trägerfahrzeug 1 über die Lagervorrichtung 17 relativ zum Trägerfahrzeug 1 automatisch verfahrbar gelagert ist.

Das Trägerfahrzeug 1 weist im Falle des Ausführungsbeispiels gemäß Fig. 1 einen Fahrzeuggrundkörper 12 auf, an dem mehrere Omnidirektional-Räder 13 drehbar angeordnet sind. Wenigstens eines der Omnidirektional-Räder 13, vorzugsweise alle Omnidirektional-Räder 13 wird bzw. werden mit einem oder mehreren Antrieben angetrieben. Die nicht näher dargestellten Antriebe sind vorzugsweise elektrische Antriebe, insbesondere geregelte elektrische Antriebe und sind mit der beispielsweise im oder am Fahrzeuggrundkörper 12 angeordneten Steuervorrichtung 21 verbunden, welche eingerichtet ist, das Trägerfahrzeug 1 durch entsprechendes Ansteuern der Antriebe für die Omnidirektional-Räder 13 automatisch zu bewegen. Die Steuervorrichtung 21 des Trägerfahrzeugs 1 ist insbesondere mit der Steuervorrichtung 9 für den Roboterarm 2 verbunden, sodass diese miteinander kommunizieren können. Es kann aber auch eine gemeinsame Steuervorrichtung für die Antriebe der Omnidirektional-Räder 13 und des Roboterarms 2 vorgesehen sein.

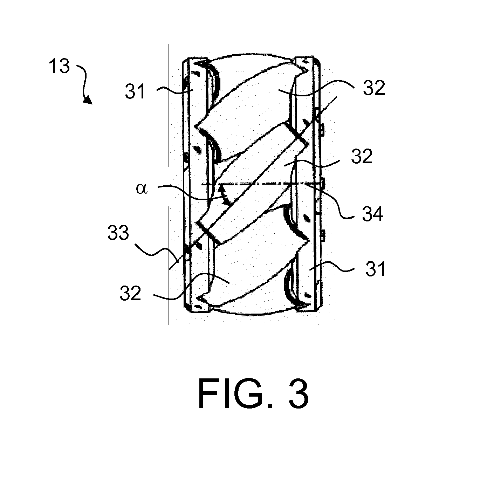

Ein Beispiel eines Omnidirektional-Rades 13 ist das sogenannte Mecanum-Rad. Ein solches Mecanum-Rad ist in der Fig. 3 als Frontansicht gezeigt.

Das als omnidirektionales bzw. Mecanum-Rad ausgebildete Omnidirektional-Rad 13 weist im Falle des vorliegenden Ausführungsbeispiels zwei starr miteinander verbundene Radscheiben 31 auf, zwischen denen mehrere Rollkörper 32 bezüglich ihrer Längsachsen 33 drehbar gelagert sind. Die beiden Radscheiben 31 können bezüglich einer Drehachse 34 drehbar gelagert sein und mittels einer der Antriebe des Trägerfahrzeugs 1 derart angetrieben werden, dass sich die beiden Radscheiben 31 bezüglich der Drehachse 34 drehen.

Im Falle des vorliegenden Ausführungsbeispiels sind die Rollkörper 32 gleichmäßig zueinander beabstandet und derart an den Radscheiben 31 gelagert, dass ihre Rollflächen über den Umfang der Radscheiben 31 herausragen. Außerdem sind die Rollkörper 32 derart an den Radscheiben 31 gelagert, dass ihre Längsachsen 33 mit der Drehachse 34 einen Winkel α von beispielsweise 45° aufweisen.

Im Falle des Ausführungsbeispiels gemäß Fig. 1 umfasst das Trägerfahrzeug 1 eine vertikal verfahrende Lagervorrichtung 17a, welche insbesondere am Fahrzeuggrundkörper 12 befestigt ist. An der vom Fahrzeuggrundkörper 12 abgewandten Seite der Lagervorrichtung 17a ist ein Tragboden 15 befestigt, deren Höhe mittels der Lagervorrichtung 17a automatisch verstellt werden kann. An dem Tragboden 15 ist eine weitere, horizontal verfahrende Lagervorrichtung 17b angeordnet. Auf der weitere, horizontal verfahrenden Lagervorrichtung 17b ist der Roboterarm 2 mit seinem Gestell 3 befestigt, so dass der Roboterarm 2 mittels der vertikal verfahrenden Lagervorrichtung 17a angehoben und/oder abgesenkt werden kann und mittels der weiteren, horizontal verfahrenden Lagervorrichtung 17b auf einer linearen Bahn in einer horizontalen Ebene bewegt werden kann.

Der vertikal verfahrenden Lagervorrichtung 17a und der horizontal verfahrenden Lagervorrichtung 17b ist jeweils ein nicht näher dargestellter Antrieb zugeordnet, welcher insbesondere mit der Steuervorrichtung 9 für den Roboterarm 2 verbunden ist. Somit ist es der Steuervorrichtung 9 ermöglicht, die beiden Lagervorrichtungen 17a, 17b und somit den Roboterarm 2, d.h. dessen Gestell 3 vertikal in Richtung des Doppelpfeils 16 und/oder horizontal in Richtung des Doppelpfeils 18 automatisch zu verstellen.

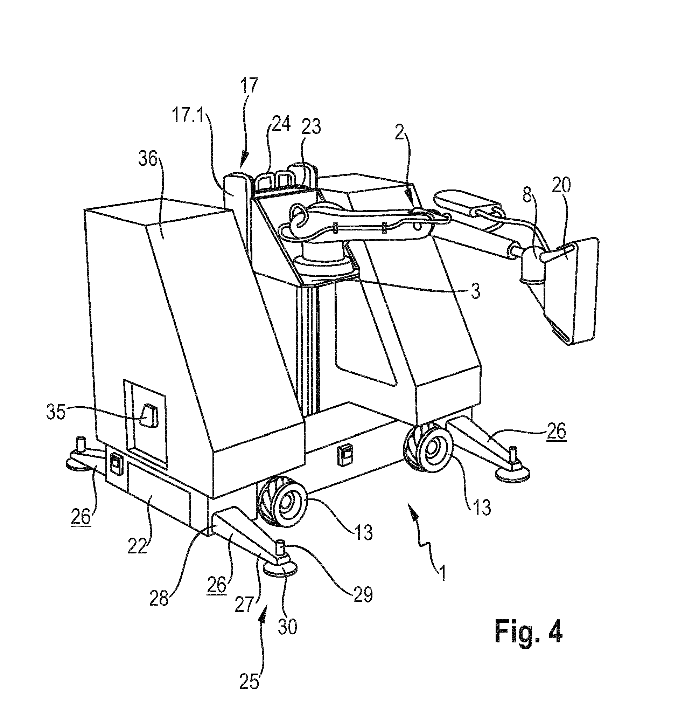

Im Falle des Ausführungsbeispiels gemäß Fig. 4 ist unmittelbar an dem Trägerfahrzeug 1 eine vertikal verfahrbare Lagervorrichtung 17 ausgebildet. Die vertikal verfahrbare Lagervorrichtung 17 weist wenigstens eine starr mit dem Trägerfahrzeug 1 verbundene Längsschiene 17.1 auf, an der ein Schlitten 23 höhenverstellbar, d.h. linear verschiebbar gelagert ist. Auf dem Schlitten 23 ist das Gestell 3 des Roboterarms 2 befestigt, so dass bei einem Heben und/oder Senken des Schlittens 23 der gesamte Roboterarm 2 gehoben bzw. gesenkt wird. Der Schlitten 23 kann, wie im dargestellten Ausführungsbeispiel gezeigt, über Umlenkketten 24 mit einem nicht näher dargestellten Gegengewicht verbunden sein. Der Lagervorrichtung 17 ist ein weiterer, nicht näher dargestellter Antrieb zugeordnet, mittels dem der Roboterarm 2 bzw. dessen Gestell 3 entlang der Längsschiene 17.1 automatisch vertikal gehoben und/oder gesenkt werden kann. Dieser Antrieb ist insbesondere mit der Steuervorrichtung 9 für den Roboterarm 2 verbunden, sodass es der Steuervorrichtung 9 ermöglicht ist, den Roboterarm 2, d.h. dessen Gestell 3 automatisch zu Heben und/oder zu Senken. Die Lagervorrichtung 17 realisiert in dieser Ausführungsform somit eine vertikal ausgerichtete Linearachse, bezüglich derer der Roboterarm 2 in Höhenrichtung verfahrbar ist.

Der mobile Roboter gemäß Fig. 4 weist außerdem eine Hubvorrichtung 25 auf, die ausgebildet ist, das Trägerfahrzeug 1 anzuheben, derart, dass die im vorliegenden Ausführungsbeispiel vier Omnidirektional-Räder 13 vom Eigengewicht des mobilen Roboters zumindest überwiegend oder vollständig entlastet sind. Im Ausführungsbeispiel gemäß Fig. 4 weist die Hubvorrichtung 25 vier automatisch verstellbare Hub-Beine 26 auf. Hierbei ist jedem Omnidirektional-Rad 13 ein eigenes Hub-Bein 26 zugeordnet. Jedem Hub-Bein 26 ist ein Antrieb zum Heben und Senken des Hub-Beins 26 zugeordnet. Jedes Hub-Bein 26 kann beispielsweise einen Ausleger 27 aufweisen, der entweder starr mit dem Trägerfahrzeug 1 verbunden sein kann oder der ausfahrbar und einfahrbar am Trägerfahrzeug 1 gelagert ist. Im eingefahrenen Zustand würden dabei die Ausleger 27 nicht mehr oder allenfalls nur noch geringfügig über die Außenkontur des Trägerfahrzeugs 1 hinaus stehen. In einer ersten Ausführung kann eine Höhenverstellung dadurch erfolgen, dass der Ausleger 27 selbst höhenverstellbar an dem Trägerfahrzeug 1 gelagert ist. In einer anderen Ausführung können die Ausleger 27 ohne eine Höhenverstellung mit ihren Trägerfahrzeug-seitigen Enden 28 an dem Trägerfahrzeug 1 gelagert sein und eine Höhenverstellung durch Heben und/oder Senken eines an einem freien Ende 29 des Auslegers 27 gelagerten Standfußes 30 erreicht werden.

Die Hubvorrichtung 25 weist nicht näher dargestellte Antriebe zum Bewegen der Hubvorrichtung auf. Jedem Hub-Bein 26 kann ein eigener Antrieb zum Heben und Senken zugeordnet sein.

Der mobile Roboter weist im Ausführungsbeispiel gemäß Fig. 4 eine Hubsteuervorrichtung 35 auf, die eingerichtet ist, die Antriebe der Hubvorrichtung 25, insbesondere die Antriebe der Hub-Beine 26 derart anzusteuern, sodass die Omnidirektional-Räder 13 vom Eigengewicht des mobilen Roboters zumindest überwiegend oder vollständig entlastet sind und das Trägerfahrzeug 1 derart ausgerichtet ist, dass das Gestell 3 des Roboterarms 2 eine vorbestimmte Orientierung im Raum einnimmt. Im dargestellten Ausführungsbeispiel kann die vorbestimmte Orientierung durch eine genau horizontale Ausrichtung des Trägerfahrzeugs 1, bzw. durch eine genau lotrechte Ausrichtung der Lagervorrichtung 17 bestimmt sein. Generell kann die vorbestimmte Orientierung durch drei programmierte Raumorientierungen eines Basisbezugskoordinatensystems des Roboterarms 2 bestimmt sein. Das Basisbezugskoordinatensystem kann beispielsweise bezüglich des Gestells 3 festgelegt sein.

Im Falle des Ausführungsbeispiels gemäß Fig. 4 umfasst der mobile Roboter noch wenigstens einen wieder aufladbaren Lithium-Ionen-Akkumulator 22 als elektrische Energieversorgung. Der Lithium-Ionen-Akkumulator 22 kann entnehmbar in oder an dem Trägerfahrzeug 1 gelagert, insbesondere befestigt sein.

Des Weiteren umfasst der mobile Roboter gemäß Fig. 4 eine Einhausung 36, welche sich in der Nähe des mobilen Roboters befindliche Personen einen Eingriff in das Innere des mobilen Roboters zumindest teilweise verwehren können. Im Inneren der Einhausung 36 kann die Steuervorrichtung 9, 21 und die Hubsteuervorrichtung 35 angeordnet sein.

Im Falle der vorliegenden Ausführungsbeispiele ist der mobile Roboter vorgesehen, ein Werkstück 19 automatisiert zu bearbeiten. Bei dem Werkstück 19 handelt es sich z.B. um ein Rotorblatt eines Windkraftwerks oder um einen Flügel eines Flugzeugs. Ein mittels des mobilen Roboters durchgeführter Bearbeitungsschritt des Werkstücks 19 ist z.B. ein Konturschleifen und/oder ein Trimmen von Kanten, das so genannte Besäumen, des Werkstücks 19. Um diesen Bearbeitungsschritt automatisiert durchzuführen, ist an der als Flansch 8 ausgeführten Befestigungsvorrichtung des Roboterarms 2 ein entsprechendes Werkzeug 20 befestigt.

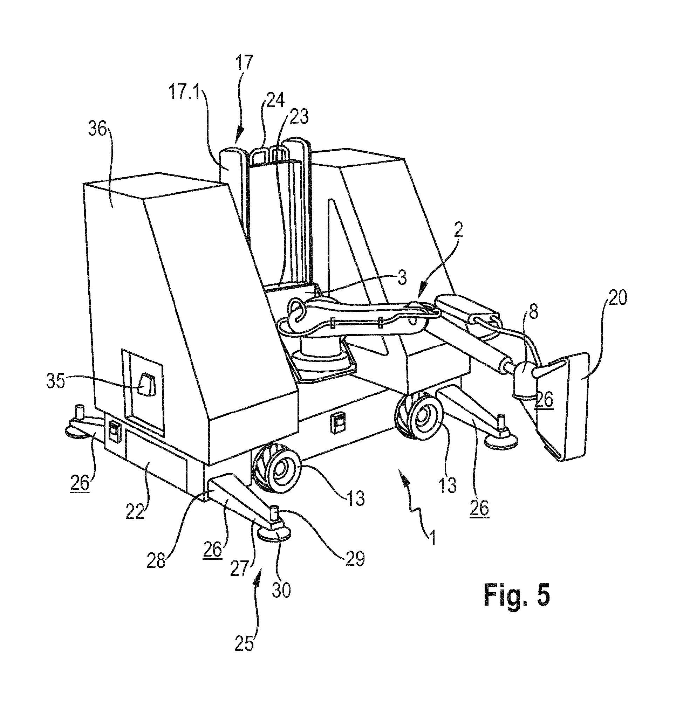

Mittel der Lagervorrichtung 17 kann der gesamte Roboterarm 2 zwischen einer unteren, wie in Fig. 4 dargestellten Position und einer oberen, in Fig. 5 dargestellten Position hin und her bewegt werden. Durch eine solche Höhenverstellbarkeit des gesamten Roboterarm 2 ist der Arbeitsbereich in dem das Werkzeug 20 durch den Roboterarm 2 bewegt werden kann gegenüber einer starren Befestigung des Roboterarms 2 an dem Trägerfahrzeug 1 vergrößert.

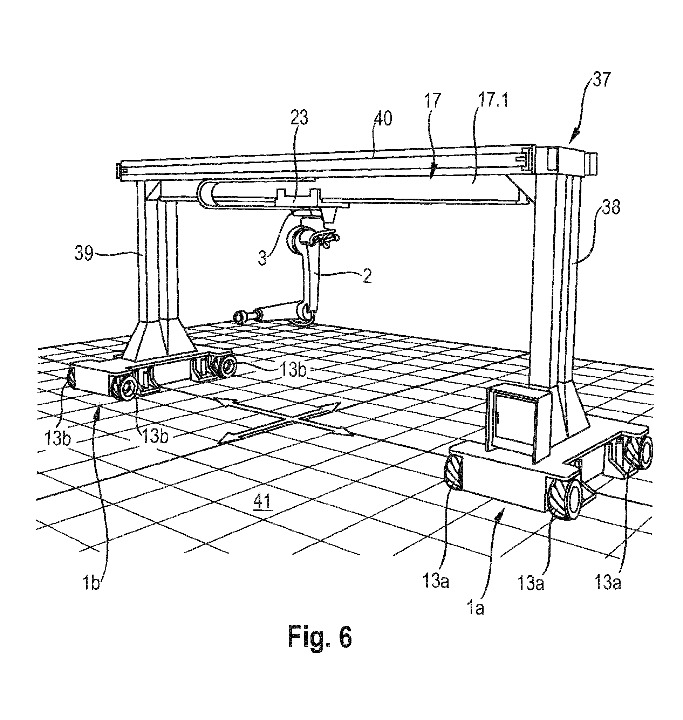

Im Falle des Ausführungsbeispiels gemäß Fig. 6 weist der mobile Roboter ein omnidirektional fahrbares Trägerfahrzeug 1a mit mehreren Omnidirektional-Rädern 13a und Antrieben zum Antreiben der Omnidirektional-Räder 13a auf. Außerdem weist der mobile Roboter ein weiteres omnidirektional fahrbares Trägerfahrzeug 1b mit mehreren Omnidirektional-Rädern 13b und Antrieben zum Antreiben der Omnidirektional-Räder 13b auf. Dabei ist das eine Trägerfahrzeug 1a mit dem weiteren Trägerfahrzeug 1b durch einen Brückenträger 37 starr verbunden. Der Brückenträger 37 weist im dargestellten Ausführungsbeispiel gemäß Fig. 6 eine erste Tragsäule 38 und eine zweite Tragsäule 39 auf. Die erste Tragsäule 38 ist starr mit dem Trägerfahrzeug 1a verbunden und die zweite Tragsäule 39 ist starr mit dem anderen Trägerfahrzeug 1b verbunden. Die beiden vertikalen Tragsäulen 38, 39 ragen von den Trägerfahrzeugen 1a, 1b ausgehend senkrecht nach oben. Die oberen Enden der beiden Tragsäulen 38, 39 sind durch einen horizontal ausgerichteten Tragbalken 40 derart verbunden, dass die beiden Trägerfahrzeuge 1a, 1b in einem festen Abstand voneinander angeordnet sind. Mittels der beiden Trägerfahrzeuge 1a, 1b, die den Brückenträger 37 halten, ist der Brückenträger 37 auf einem Boden 41 verfahrbar.

Der Brückenträger 37 weist im Ausführungsbeispiel gemäß Fig. 6 eine Lagervorrichtung 17 auf. Die Lagervorrichtung 17 ist insoweit starr an dem Brückenträger 37 bzw. an dem Tragbalken 40 des Brückenträgers 37 befestigt. Diese horizontal verfahrbare Lagervorrichtung 17 weist wenigstens eine starr mit dem Brückenträger 37 bzw. starr mit dem Tragbalken 40 verbundene Längsschiene 17.1 auf, an der ein Schlitten 23 auf einer gleich bleibenden Höhe verstellbar, d.h. linear hin und her verschiebbar gelagert ist. Auf dem Schlitten 23 ist das Gestell 3 des Roboterarms 2 befestigt, so dass bei einem Hin- und Herbewegen des Schlittens 23 der gesamte Roboterarm 2 hin- und herbewegt wird. Der Lagervorrichtung 17 ist ein weiterer, nicht näher dargestellter Antrieb zugeordnet, mittels dem der Roboterarm 2 bzw. dessen Gestell 3 entlang der Längsschiene 17.1 automatisch hin- und herbewegt werden kann. Dieser Antrieb ist insbesondere mit der Steuervorrichtung 9 für den Roboterarm 2 verbunden, sodass es der Steuervorrichtung 9 ermöglicht ist, den Roboterarm 2, d.h. dessen Gestell 3 automatisch hin- und herzubewegen. Die Lagervorrichtung 17 realisiert in dieser Ausführungsform somit eine Roboter-Portalanlage, bezüglich derer der Roboterarm 2 in einer horizontalen Ebene verfahrbar ist.

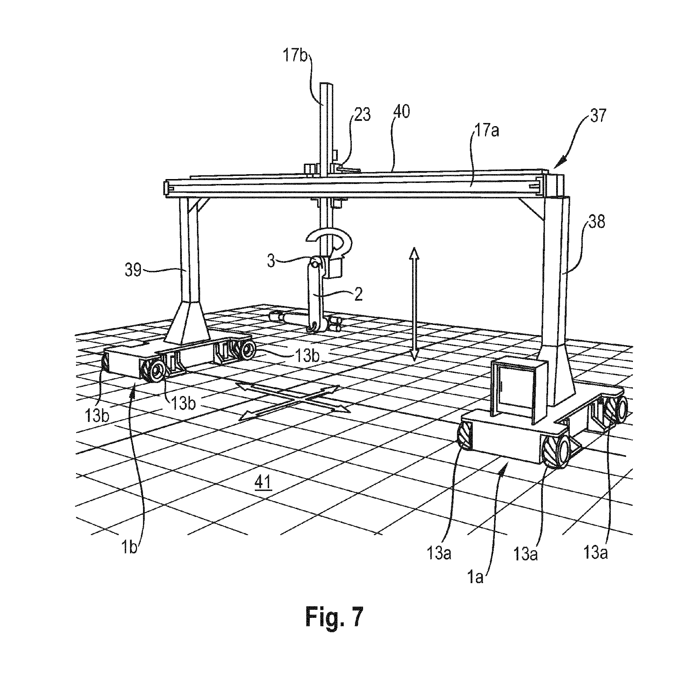

Im Falle des Ausführungsbeispiels gemäß Fig. 7 weist der mobile Roboter neben der Lagervorrichtung 17a, die analog der Lagervorrichtung 17 gemäß Fig. 6 ausgeführt sein kann, eine weitere Lagervorrichtung 17b auf. Die weitere Lagervorrichtung 17b ist automatisch verfahrbar an der Lagervorrichtung 17a gelagert, wobei die weitere Lagervorrichtung 17b ausgebildet ist, den Roboterarm 2 relativ zur Lagervorrichtung 17a automatisch verfahrbar zu lagern. Die Bewegungsrichtung der Lagervorrichtung 17b ist senkrecht zur Bewegungsrichtung der Lagervorrichtung 17a ausgeführt. Die Lagervorrichtung 17a ist dabei ausgebildet, die weitere Lagervorrichtung 17b in einer horizontalen linearen Richtung zu bewegen und die weitere Lagervorrichtung 17b ist ausgebildet, den Roboterarm 2 in einer vertikalen linearen Richtung zu bewegen. Mittels der Lagervorrichtung 17a kann der Roboterarm 2 also hin- und herbewegt werden und mittels der Lagervorrichtung 17b kann der Roboterarm 2 angehoben und/oder abgesenkt werden. Die Lagervorrichtung 17a und die Lagervorrichtung 17b realisieren zusammen mit dem Brückenträger 37 in dieser Ausführungsform somit eine zweiachsige Roboter-Portalanlage, bezüglich derer der Roboterarm 2 in einer horizontalen Ebene und in vertikaler Richtung verfahrbar ist.

## Patentansprüche

1. Mobiler Roboter, aufweisend
- ein omnidirektional fahrbares Trägerfahrzeug (1) mit mehreren Omnidirektional-Rädern (13) und Antrieben zum Antreiben der Omnidirektional-Räder (13),
- einen Roboterarm (2), der mehrere, hintereinander angeordnete Glieder (3-7) und Antriebe zum Bewegen der Glieder (3-7) aufweist, und
- eine Lagervorrichtung (17), die ausgebildet ist, den Roboterarm (2) relativ zum Trägerfahrzeug (1) automatisch verfahrbar am Trägerfahrzeug (1) zu lagern und einen der Lagervorrichtung (17) zugeordneten Antrieb zum Bewegen des Roboterarms (2) relativ zum Trägerfahrzeug (1).

2. Mobiler Roboter nach Anspruch 1, bei dem die Lagervorrichtung (17) ausgebildet ist, den Roboterarm (2) in einer vertikalen und/oder horizontalen Richtung zu verfahren.

3. Mobiler Roboter nach Anspruch 1 oder 2, bei dem die Lagervorrichtung (17) wenigstens eine an dem Trägerfahrzeug (1) befestigte Längsschiene (17.1) aufweist, auf welcher der Roboterarm (2) linear fahrbar gelagert ist.

4. Mobiler Roboter nach einem der Ansprüche 1 bis 3, bei dem die Omnidirektional-Räder (13) Mecanum-Räder sind.

5. Mobiler Roboter nach einem der Ansprüche 1 bis 4, aufweisend eine Hubvorrichtung (25), die ausgebildet ist, das Trägerfahrzeug (1) anzuheben, derart, dass die Omnidirektional-Räder (13) vom Eigengewicht des mobilen Roboters zumindest überwiegend oder vollständig entlastet sind und Antriebe zum Bewegen der Hubvorrichtung (25).

6. Mobiler Roboter nach Anspruch 5, bei dem die Hubvorrichtung (25) wenigstens drei, insbesondere vier automatisch verstellbare Hub-Beine (26) und Antriebe zum Heben und Senken der Hub-Beine (26) aufweist.

7. Mobiler Roboter nach Anspruch 5 oder 6, bei dem der Roboterarm (2) ein mit der Lagervorrichtung (17) verbundenes Gestell (3) aufweist, und der mobile Roboter eine Hubsteuervorrichtung (35) aufweist, die eingerichtet ist, die Antriebe der Hubvorrichtung (25), insbesondere die Antriebe der Hub-Beine (26) derart anzusteuern, sodass das Trägerfahrzeug (1) ausgerichtet ist, derart, dass das Gestell (3) des Roboterarms (2) eine vorbestimmte Orientierung im Raum einnimmt.

8. Mobiler Roboter nach einem der Ansprüche 1 bis 7, aufweisend
- wenigstens ein omnidirektional fahrbares Trägerfahrzeug (1a) mit mehreren Omnidirektional-Rädern (13a) und Antrieben zum Antreiben der Omnidirektional-Räder (13a),
- wenigstens ein weiteres omnidirektional fahrbares Trägerfahrzeug (1b) mit mehreren Omnidirektional-Rädern (13b) und Antrieben zum Antreiben der Omnidirektional-Räder (13b), und
- einen das Trägerfahrzeug (1a) mit dem weiteren Trägerfahrzeug (1b) starr verbindenden Brückenträger (37), welcher die Lagervorrichtung (17) und/oder den Roboterarm (2) trägt.

9. Mobiler Roboter nach Anspruch 8, bei dem die Lagervorrichtung (17a), an dem Brückenträger (37) befestigt ist und eine weitere Lagervorrichtung (17b) vorgesehen ist, die automatisch verfahrbar an der Lagervorrichtung (17a) gelagert ist, wobei die weitere Lagervorrichtung (17b) ausgebildet ist, den Roboterarm (2) relativ zur Lagervorrichtung (17a) automatisch verfahrbar zu lagern.

10. Mobiler Roboter nach Anspruch 9, bei dem die Lagervorrichtung (17a) ausgebildet ist, die weitere Lagervorrichtung (17b) in einer horizontalen Richtung, insbesondere linear zu bewegen.

11. Mobiler Roboter nach Anspruch 9 oder 10, bei dem die weitere Lagervorrichtung (17b) ausgebildet ist, den Roboterarm (2) in einer vertikalen Richtung, insbesondere linear zu bewegen.

12. Mobiler Roboter nach einem der Ansprüche 1 bis 11, aufweisend wenigstens einen Lithium-Ionen-Akkumulator (22), der eingerichtet ist, die Antriebe des Trägerfahrzeugs (1), des Roboterarms (2), der Lagervorrichtungen (17, 17a, 17b), der Hubvorrichtung (25), der Steuervorrichtung (9), der weiteren Steuervorrichtung (21) und/oder der Hubsteuervorrichtung (35) mit elektrischer Energie zu versorgen.
